# EUROPEAN PATENT APPLICATION

(11) **EP 4 800 812 A1**
(43) Date of publication of application: **02.09.2026**
(21) Application number: 24882895.6
(22) Date of filing: 25.10.2024
(51) Int. Cl.: H01M 50/131, H01M 50/105, H01M 50/124, H01M 50/126, H01M 50/122, H01M 50/119, B32B 15/20

(54) **SEALANT FILM, POUCH FILM LAMINATE COMPRISING SAME, POUCH-TYPE BATTERY CASE, AND METHOD FOR MANUFACTURING SAME**

(30) Priority: 25.10.2023 KR 20230144092; 28.12.2023 KR 20230194083
(71) Applicant: Youlchon Chemical Co., Ltd., Seoul 07057 (KR)
(72) Inventor: SONG, Nok Jung, Seoul 07057 (KR); HAN, Hee Sik, Ansan-si, Gyeonggi-do 15430 (KR); JANG, Jee Eun, Ansan-si, Gyeonggi-do 15430 (KR); KIM, Yoohan, Ansan-si, Gyeonggi-do 15430 (KR); HWANG, Sean Soo, Ansan-si, Gyeonggi-do 15430 (KR)
(74) Representative: Meissner Bolte Partnerschaft mbB
(86) International application number: PCT/KR2024/016397
(87) International publication number: WO 2025/089869

(57) **Abstract**

Provided are a sealant film, which includes a matrix resin and a domain resin included in the matrix resin, having a multi-layer structure including a metal adhesive layer, a core layer, and a heat-seal layer in which a surface of the heat-seal layer has Ra ranging from 0.03 to 0.1, Rz ranging from 0.2 to 0.5, Rt ranging from 0.2 to 0.5, and Rsm ranging from 5.8 to 75, in surface roughness.

## Description

### [Technical Field]

### CROSS-REFERENCE TO RELATED APPLICATION

This application claims the benefit of priority to Korean Patent Application No. 10-2023-0144092, filed in the Korean Intellectual Property Office on October 25, 2023, and Korean Patent Application No. 10-2023-0194083, filed in the Korean Intellectual Property Office on December 28, 2023, the entire contents of which are incorporated herein by reference.

### Technical Field

The present disclosure relates to a sealant film, a pouch-film laminate including the same, a pouch-type battery case, and a method for preparing the same.

### [Background Art]

Secondary batteries are classified into a nickel-cadmium battery, a nickel-hydrogen battery, a lithium-ion battery, and a lithium-ion polymer battery. Such a secondary battery is applied and used for a larger product, such as an electric vehicle or a hybrid vehicle, which requires higher power, a power storage device, which stores extra generated power or renewable energy, and a backup power storage device, as well as a smaller product including a digital camera, a P-DVD, an MP3P, a cellular phone, a PDA, a Portable Game Device, a Power Tool, and an E-bike.

To manufacture such a secondary battery, first, electrode active material slurry are coated to each of a cathode current collector and an anode current collector to manufacture a cathode and an anode to be stacked at opposite sides of a separator, thereby forming an electrode assembly in a specific shape. In addition, after the electrode assembly is received in a battery caste, an electrolyte is introduced into a result structure, and the result structure is sealed.

The secondary batteries may be classified into a pouch-type, a cylinder-type, or a prism-type, depending on the type of an exterior material of the case to receive the electrode assembly.

Among the secondary batteries, the pouch-type battery, which has the form in which the electrode assembly (cell) is embedded in a pouch including a metal laminate sheet, may be easily manufactured, and have lower manufacturing costs. Particularly, pouch-type batteries are connected to each other in series or in parallel in the form of unit cells to manufacture a large-capacity battery pack. Accordingly, the pouch-type battery has mainly been utilized in a field, such as an electric vehicle, requiring a large-capacity secondary battery. The case of the pouch-type secondary battery is manufactured by forming a cup part, as press-machining is performed with respect to a pouch-film laminate having flexibility. In addition, when the cup part is formed, the electrode assembly is received in a receiving space of the cup part and the sealing part is sealed to manufacture the secondary battery.

Meanwhile, a conventional pouch film product is prepared using a slip agent. When the slip agent is used, and when an extrusion process and a winding process are performed, slip properties may be imparted to a PP surface of the sealant film and a PET surface of an outer protective layer during pouch film forming. Accordingly, the pouch film may be more easily formed. However, when the slip agent is used in an excessive amount, a forming frame of a film forming device may be contaminated. Such a contamination may serve as impurities when a film product is formed, thereby causing the crack of the film product. In addition, as the film forming device is contaminated, the film product may be damaged. Accordingly, for a conventional pouch film product, the slip agent is used in a minimum amount, such that the contamination of the film forming device is minimized.

However, when the slip agent is used in the minimum amount, the slip agent is not migrated at an initial stage, such that a frictional coefficient of a product is increased. Accordingly, a problem may be caused in forming. When a working time is elapsed, the film forming device may be additionally contaminated due to the excessive amount of slip agent.

### [Disclosure]

### [Technical Problem]

Another aspect of the present disclosure provides a sealant film in which forming contamination and temporal change are suppressed by controlling the surface roughness of a heat-seal layer, a pouch-film laminate including the same, a pouch-type battery case, and a method for preparing the same.

### [Technical Solution]

The present disclosure provides a sealant film, a pouch-film laminate including the same, a pouch-type battery case including the same, and a method for manufacturing the same.
(1) The present disclosure provides a sealant film, which includes a matrix resin and a domain resin included in the matrix resin, having a multi-layer structure including a metal adhesive layer, a core layer, and a heat-seal layer in which the surface of the heat-seal layer has Ra ranging from 0.03 to 0.1, Rz ranging from 0.2 to 0.5, Rt ranging from 0.2 to 0.5, and Rsm ranging from 5.8 to 75, in surface roughness.
(2) The present disclosure provides a sealant film in which the domain resin is included in a content ranging from 1 wt% to 15 wt%, based on a total weight of the resin composition, in (1).
(3) The present disclosure provides a sealant film in which the domain resin has an average particle diameter ranging from 50 nm to 140 nm, in (1) or (2).
(4) The present disclosure provides a sealant film in which the surface of the heat-seal layer is surface-modified by the domain resin, in any one of (1) to (3).
(5) The present disclosure provides a sealant film in which the matrix resin includes a polyolefin-based resin, in any one of (1) to (4).
(6) The present disclosure provides a sealant film in which the domain resin includes at least one selected from the group consisting of a polyolefin-based elastomer, polymethyl methacrylate, EPDM, silica, CaCO₃, BaSO₄, zeolite, and Talc, in any one of (1) to (5).
(7) The present disclosure provides a sealant film in which the surface of the heat-seal layer has a static frictional coefficient ranging from 0.2 to 0.23, in any one of (1) to (6).
(8) The present disclosure provides a pouch-film laminate including the sealant film according to any one of (1) to (7), an outer layer, and a barrier layer interposed between the sealant film and the outer layer and including aluminum.
(9) The present disclosure provides a pouch-film laminate, in which the outer layer includes polyethylene terephthalate (PET), in (8).
(10) The present disclosure provides a pouch-type secondary battery case including a pouch-film laminate according to (8) or (9).
(11) The present disclosure provides a method for preparing a sealant film, which includes adding a surface modifier in a content ranging from 1 wt% to 15 wt%, based on a total weight of the resin composition to perform matte-treatment with respect to the surface of the heat-seal layer, further adding the slip agent to the heat-seal layer, and stacking the metal adhesive layer, the core layer, and the heat-seal layer.
(12) The present disclosure provides a method for preparing a sealant film in which the surface modifier includes at least one material selected from the group consisting of a polyolefin-based elastomer, polymethyl methacrylate, EPDM, silica, CaCO₃, BaSO₄, zeolite, and Talc, in (11).
(13) The present disclosure provides a method for preparing a sealant film in which a slip agent has a content ranging from 0.01 wt% to 0.5 wt%, in (11).

### [Advantageous Effects]

According to the present disclosure, for the sealant film, the surface roughness of the sealant film may be controlled to prevent formability contamination and to prevent the temporal change from the surface migration of the additive, such as the slip agent, such that higher formability is exhibited, thereby improving the processability.

According to the present disclosure, the sealant film may include the surface matte-treated, thereby improving the excellent heat-seal strength and the excellent insulating resistance characteristics.

### [Description of Drawings]

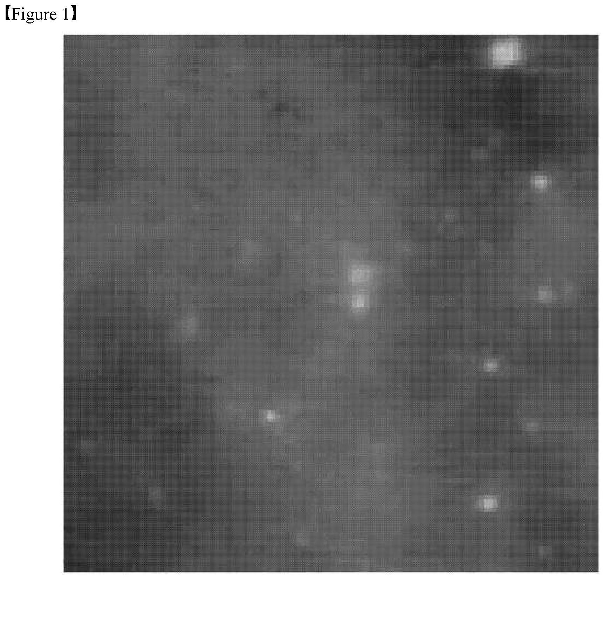

FIG. 1 illustrates a surface of a heat-seal layer of a surface-modified sealant film according to Comparative Example 1, which is captured using a laser surface roughness measuring device;

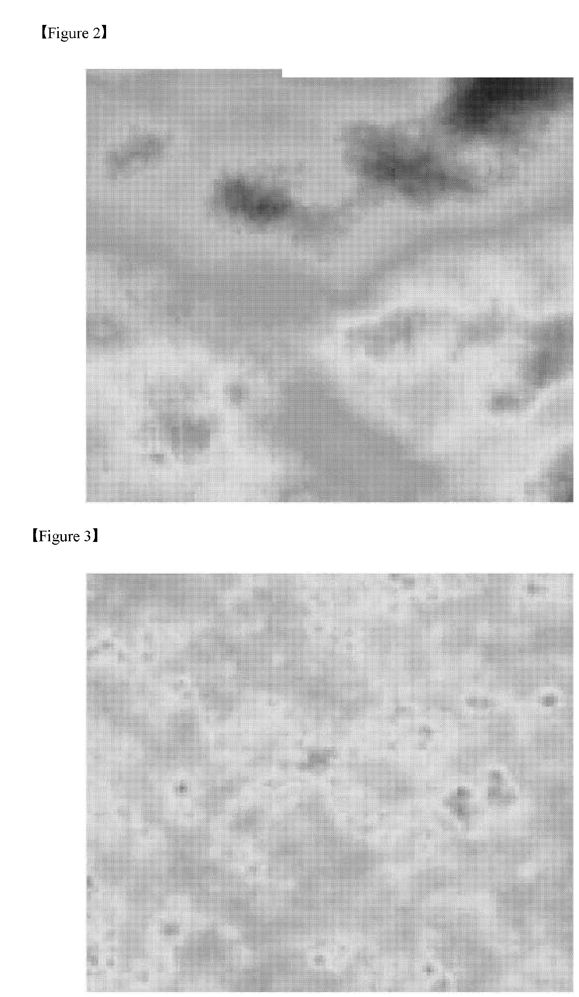

FIG. 2 illustrates a surface of a heat-seal layer of a surface-modified sealant film according to Example 1, which is captured using a laser surface roughness measuring device;
FIG. 3 illustrates a surface of a heat-adhesive layer of a surface-modified sealant film according to Example 2, which is captured using a laser surface roughness measuring device;

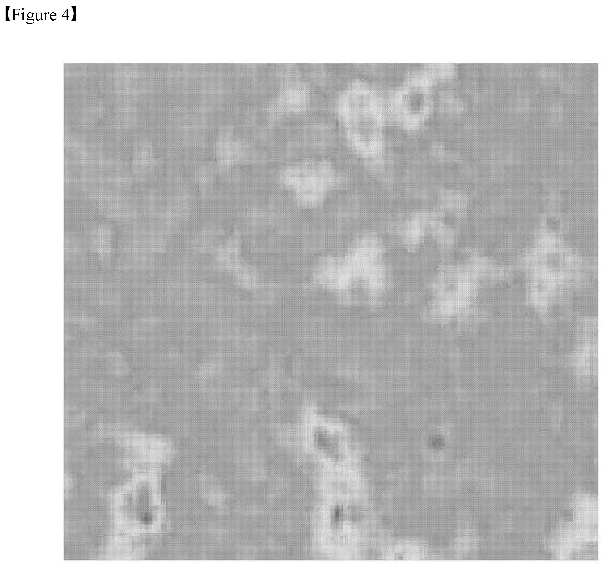

FIG. 4 illustrates a surface of a heat-adhesive layer of a surface-modified sealant film according to Comparative Example 2, which is captured using a laser surface roughness measuring device; and

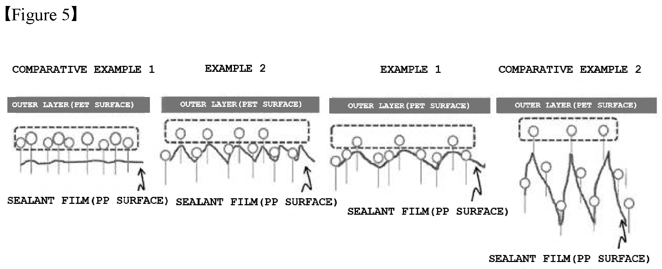

FIG. 5 illustrates a degree of transfer of a slip agent included between an outer layer (PET layer) film and a sealant (PP) film of the Examples and the Comparative Examples during a winding process.

### [Mode for Invention]

Hereinafter, the present disclosure will be described in more detail for the understanding of the present disclosure. In this case, terms or words used in the present specification and the claims should not be interpreted as commonly-used dictionary meanings, but be interpreted as to be relevant to the technical scope of the present disclosure based on the fact that the inventor may properly define the concept of the terms to explain the present disclosure in best ways.

The terms used in the present disclosure are provided only for the illustrative purpose, and the present disclosure is not limited thereto. The singular forms are intended to include the plural forms unless the context clearly indicates otherwise.

In this specification, it will be further understood that the terms "comprises," "includes," or "has," specify the presence of stated features, numbers, steps, components, parts, or the combination thereof, but do not preclude the presence or addition of one or more other features, numbers, steps, components, and/or the combination thereof.

In this specification, the term "matte treatment" refers to a matte finishing or imparting surface roughness. Such matte treatment may be imparting surface roughness by including a separate domain resin, as described later, for example.

### Sealant film

The present disclosure provides a sealant film including a matrix resin and a domain resin included in the matrix resin, having a multi-layer structure including a metal adhesive layer, a core layer, and a heat-seal layer in which the surface of the heat-seal layer has Ra ranging from 0.03 to 0.1, Rz ranging from 0.2 to 0.5, Rt ranging from 0.2 to 0.5, and Rsm ranging from 5.8 to 75, in surface roughness.

Conventionally, when a pouch-film laminate is prepared, a slip agent is generally used. As the slip agent is used, a slip property is imparted to the surface of the sealant film and the surface of an outer layer during a winding process, such that a forming process is easily performed. However, when an additive, such as the slip agent, is used, the additive is migrated onto the surface of the sealant film to contaminate a guide roll during a roll-to-roll process for a pouch, or to contaminate the surface of a foaming punch and a foaming frame during the forming of the pouch, thereby making a machining trouble (the surface scratch and crack after forming). An aging phenomenon, which is a contamination phenomenon resulting from the change in physical properties over time, may be more deteriorated due to a degree of additive migration depending on a product environment or loss of a slip agent occurring at a commercialization stage. Accordingly, the lifespan of the pouch-film laminate for the secondary battery may be decreased, and the commercial value of a product may be degraded.

The inventors of the present disclosure recognized such problems and developed a sealant film for reducing an amount of additives, such as a slip agent, by controlling a content and an average particle diameter of a domain resin included in the sealant film to maintain surface roughness of a surface of the sealant film within a specific range, by maintaining heat seal strength and insulation resistance characteristics at a higher level, by preventing processing troubles due to aging behavior caused by the surface migration of additives such as the slip agent, and reducing contamination caused by foreign matters by controlling a contact area during product forming.

According to the present disclosure, the sealant film includes a matrix resin and a domain resin included in the matrix resin. The sealant film may be an innermost layer of the pouch-film laminate, and may make direct contact with a battery body part (e.g., an electrode, a separator, and an electrolyte). Accordingly, the sealant film should have excellent electrolyte resistance and an excellent insulating property.

The matrix resin is a main material for forming the sealant film. To this end, the matrix resin may include at least polyolefin-based resin. The polyolefin-based resin has excellent electrolyte resistance and an excellent insulating property. Accordingly, even the sealant film including the polyolefin-based resin may also have the excellent electrolyte resistance and the excellent insulating property derived from the polyolefin-based resin.

The polyolefin-based resin may include, for example, a polyolefin derived from an olefin or a derivative of the olefin, a copolymer thereof, or a blend including at least one from among the above materials. For example, the polyolefin-based resin may include at least one selected from the group consisting of polyethylene, polypropylene, polybutylene, a copolymer derived from a monomer derived from ethylene and/or propylene and a monomer derived from an alpha-olefin, or a blend thereof.

The domain resin refers to a resin, which is added to impart a specific function, for example, surface roughness, in a composition included in the sealant film other than the matrix resin. In addition, the content and the average particle diameter of the domain resin may be adjusted, thereby controlling the surface roughness of the surface of the sealant film to be within a specific range.

The domain resin may include at least one material selected from the group consisting of polyolefin-based elastomer, polymethyl methacrylate, EPDM, silica, CaCO₃, BaSO₄, zeolite, and Talc. Specifically, to impart surface roughness to the surface of a sealant film, the domain resin may properly include an elastomer. The domain resin may include a polyolefin-based elastomer resin. The polyolefin-based elastomer resin, which forms the surface roughness and improves the heat-seal strength and the adhesive characteristic of the barrier layer, may include an elastomer such as an ethylene-propylene copolymer (EPR)-based elastomer resin, an ethylene-butene copolymer (EBR)-based elastomer resin, an ethylene-hexene copolymer (EHR)-based polyolefin elastomer resin, an ethylene-octene copolymer (EOR)-based polyolefin elastomer resin, a propylene-butene copolymer (PBR)-based polyolefin elastomer resin, a propylene-hexene copolymer (PHR)-based polyolefin elastomer resin, a propylene-octene copolymer (POR)-based polyolefin elastomer resin, a thermoplastic polyolefin elastomer (TPO) such as an LLDPE-based elastomer, reactor-made thermoplastic olefin (RTPO), and thermoplastic polyurethane (TPU).

According to the present disclosure, the sealant film has a multi-layer structure including the metal adhesive layer, the core layer, and the heat-seal layer. The metal adhesive layer may make contact with one surface of a barrier layer of the pouch-film laminate to be described layer. The metal adhesive layer, the core layer, and the heat-seal layer are sequentially stacked to form the multi-layer structure. The surface of the heat-seal layer is imparted with the surface roughness due to the domain resin. In this case, the surface of the heat-seal layer may be surface-modified or matte-treated by the domain resin. The surface of the heat-seal layer may be named a matte surface. The matte surface may reduce the contamination degree, as the additive including the slip agent reduces the contact area of the sealant film.

In addition, in the surface roughness of the surface of the heat-seal layer, Ra ranges from 0.03 to 0.1, Rz ranges from 0.2 to 0.5, Rt ranges from 0.2 to 0.5, and Rsm ranges from 5.8 to 75. For example, Ra may be at least 0.05, at least 0.055, at least 0.06, at least 0.065, at least 0.07, at most 0.1, at most 0.095, at most 0.09, at most 0.085, at most 0.08, or at most 0.075, Rz may be at least 0.2, at least 0.25, at least 0.3, at least 0.35, at most 0.5, at most 0.45, or at most 0.4, and Rt may be at least 0.2, at least 0.25, at least 0.3, at least 0.35, at most 0.5, at most 0.45, or at most 0.4. In addition, for example, Rsm may be at least 5.8, at least 6.0, at least 6.5, at least 7.3, at least 7.5, at least 7.7, at least 8.0, at most 75, at most 70, at most 65, at most 60, at most 55, at most 50, at most 45, at most 40, at most 35, at most 30, at most 25, at most 22, at most 21, at most 20, at most 15, at most 10, or at most 8.

The surface roughness (Roughness) may be measured by being classified into a center line average roughness (Ra), a ten-point average roughness (Rz), a maximum surface roughness within an evaluation length (Rt), and an average spacing of irregularities (Rsm). Regarding the surface roughness, linear roughness in five MD directions and five TD directions over an entire area of the heat-seal layer may be measured using a laser roughness measuring device (MPLAPON100 x LEXT) under conditions of a resolution of 1024 × 1024, a laser brightness of 36.5, and a pitch of 0.24, and each surface roughness value may be calculated. The degree and the tendency of transferring a slip agent distributed on a surface may vary depending on the surface roughness. Accordingly, the sealant film according to the present disclosure should satisfy four components of the surface roughness of the surface of the heat-seat layer. When the values of Ra, Rz, Rt, and Rsm which are the surface roughness values correspond to the numeric range, the excellent thermal strength and the excellent insulating resistance characteristics are maintained and the forming contamination degree is reduced during the forming of the film. In addition, the optimal frictional coefficient is provided such that the excellent film formability is exhibited.

When a value of the surface roughness deviates from an upper limit of the numerical range, the contamination degree may be reduced. However, heat-seal strength and an insulation resistance value may be significantly lowered. In this case, the realization as the product may be failed. In addition, when the surface roughness value deviates from the lower limit of the numeric value, the additive, such as the slip agent, present on the surface of the sealant film is transferred to the outer layer during the winding process. In this case, the forming contamination, which is an issue to be resolved, may not be prevented.

According to an embodiment of the present disclosure, the sealant film is provided with the domain resin in the content ranging from 1 wt% to 15 wt%, based on the weight of the total resin. In this case, the total resin may refer to a resin including the matrix resin and the domain resin. For example, the domain resin may be included in the content of at least 1.0 wt%, at least 1.5 wt%, at least 2.0 wt%, at least 2.5 wt%, at least 3.0 wt%, at least 3.5 wt%, at least 4.0 wt%, at least 4.5 wt%, at least 5.0 wt%, at least 5.5 wt%, at least 6.0 wt%, at least 6.5 wt%, at least 7.0 wt%, at least 7.5 wt%, at least 8.0 wt%, at most 15.0 wt%, at most 14.5 wt%, at most 14.0 wt%, at most 13.5 wt%, at most 13.0 wt%, at most 12.5 wt%, at most 12.0 wt%, at most 11.5 wt%, at most 11.0 wt%, at most 10.5 wt%, or at most 10.0 wt%, based on the total weight of the total resin. Specifically, the domain resin may be included in the content ranging from 8.0 wt% to 10.0 wt%. When the content of the domain resin satisfies the range, the surface roughness satisfying the specific numeric range of four factors of the surface roughness may be made. In this case, the excellent heat-seal strength and the excellent insulating resistance characteristics may be maintained. In addition, when the film is formed, the forming contamination may be reduced, and the optimal frictional coefficient may be provided.

In addition, according to an embodiment of the present disclosure, the average particle diameter of the domain resin may range 50 nm to 140 nm. The average particle diameter of the domain resin may be calculated through an arithmetic averaging manner based on a major axis of each domain resin from images measured through transmission electron microscopy (TEM). In addition, the average particle diameter of the domain resin may be controlled by various conditions such as a required time, a temperature condition, and a blending speed in a blending process with a matrix resin. For example, the average particle diameter of the domain resin may be at least 50 nm, at least 55 nm, at least 60 nm, at least 65 nm, at least 70 nm, at least 75 nm, at least 80 nm, at most 140 nm, at most 135 nm, at most 130 nm, at most 125 nm, at most 120 nm, at most 115 nm, at most 110 nm, at most 105 nm, or at most 100 nm, and specifically, at least 70 nm and at most 120 nm. The surface roughness described above does not depend only on a content of the domain resin, but is also affected by a degree of dispersion of the domain resin, that is, an average particle diameter of the domain resin. Accordingly, the content and the average particle diameter of the domain resin act in the systematical relation to form the optimal surface roughness value. Accordingly, the effect of the present disclosure may be exhibited. Accordingly, when the average particle diameter of the domain resin satisfies the numerical range, the excellent heat-seal strength and the excellent insulating resistance characteristics may be maintained and the forming contamination degree may be reduced during the forming of the sealant film, so the optimal frictional coefficient is provided.

According to an embodiment of the present disclosure, a static frictional coefficient of the surface of the heat-seal layer may range from 0.2 to 0.23. For example, the static frictional coefficient of the surface of the heat-seal layer may be at least 0.2, at least 0.205, at least 0.21, at least 0.215, at most 0.23, at most 0.225, or at most 0.22. According to the present disclosure, the surface roughness of the surface of the heat-seal layer is controlled such that the static frictional coefficient is maintained in a specific range. As the static frictional coefficient is maintained in the specific range, the excellent formability and the effect for preventing contamination may be exhibited.

### Pouch-film laminate

The present disclosure provides the pouch-film laminate which includes the sealant film according to the present disclosure, an outer layer, and a barrier layer interposed between the sealant film and the outer layer and including aluminum.

The outer layer may be the outermost layer of the pouch-film laminate for encapsulating the secondary battery, and may include a heat-resistance resin layer having a melting point higher than a thermal bonding temperature of the sealant film to be described later. The heat-resistance resin layer may include any one selected from the group consisting of polyimide, polyester, polyolefin, the copolymer thereof, and the blend thereof. In this case, the outer layer may have a single-layer structure or a multi-layer structure including at least one of the above-described materials.

The outer layer may have an appropriate thickness in a range for ensuring sufficient mechanical strength and sufficient formability, as an exterior material. For example, the thickness of the outer layer may be at least 15 µm, at least 20 µm, at least 25 µm, at least 35 µm, at most 140 µm, at most 110 µm, at most 100 µm, at most 90 µm, at most 80 µm, at most 70 µm, at most 50 µm, or at most 40 µm. When the thickness of the outer layer satisfies the range, a higher dielectric breakdown voltage may be maintained.

According to an embodiment of the present disclosure, the outer layer may include a film formed by laminating nylon and polyethylene terephthalate (PET). In this case, as the thickness of the PET film is decreased, and the thickness of the nylon layer is increased, more excellent formability may be exhibited. However, the PET film having the thinner thickness may be disadvantageous in terms of the dielectric breakdown voltage. In this respect, for example, the thickness of the nylon layer may be at least 10 µm, at least 12 µm, at least 15 µm, at least 20 µm, at most 40 µm, at most 35 µm, or at most 30 µm, and the thickness of the PET layer may be at least 5 µm, at least 8 µm, at least 10 µm, at most 30 µm, at most 25 µm, or at most 20 µm.

The barrier layer may be an intermediate layer (e.g., a layer interposed between the outer layer and the sealant film) of the pouch-film laminate for encapsulating of the secondary battery, and may prevent gas and/or moisture from being infiltrated. The type of the barrier layer is not particularly limited thereto. For example, the barrier layer may include at least one selected from the group consisting of aluminum, stainless steel, copper, titanium, and the alloy thereof, and preferably include aluminum.

The barrier layer may have an appropriate thickness within a range for effectively preventing the gas and/or moisture described above from being infiltrated into the barrier layer and for ensuring sufficient formability. For example, the barrier layer may have the thickness of at least 20 µm, at least 30 µm, at least 40 µm, at least 50 µm, at least 55 µm, at least 60 µm, at most 150 µm, at most 140 µm, at most 130 µm, at most 125 µm, at most 120 µm, at most 110 µm, at most 100 µm, or at most 90 µm.

The sealant film may be an innermost layer of the pouch-film laminate for encapsulating the secondary battery. The sealant film may constitute a sealant layer of a pouch-film laminate. In other words, the sealant film may make direct contact with a battery body part (e.g., an electrode, a separator and/or an electrolyte). Accordingly, the sealant film should have excellent electrolyte resistance and an excellent insulating property. For example, the sealant film may have a thickness of at least 20 µm, at least 30 µm, at least 40 µm, at least 50 µm, at most 80 µm, at most 70 µm, or at most 60 µm. When the thickness of the sealant film satisfies the numerical range, the sealant film may exhibit excellent electrolyte resistance and the excellent insulating property.

According to an embodiment of the present disclosure, the sealant film may include a polypropylene layer (PP), for example, a cast polypropylene (CPP) film. The polypropylene layer (PP) and the barrier layer may make contact with each other through an extrusion coating (EC) layer of the polypropylene-based resin. In this case, for example, the thickness of the CPP layer of the sealant film may range from 20 µm to 80 µm. The thickness of the PP layer of the sealant film may range from 0 µm to 60 µm.

### Secondary battery

According to an embodiment, the secondary battery includes a pouch-type secondary battery case including the battery body part and the pouch-film laminate. The battery body part may be sealed by the pouch-type secondary battery case. For example, the secondary battery may be a lithium secondary battery. In this case, the battery body part may include an anode for the lithium secondary battery, a cathode for the lithium secondary battery, and an electrolyte.

The cathode for the lithium secondary battery is not particularly limited, as long as the cathode for the all solid state battery is commonly used. For example, the cathode for the lithium secondary battery may include a cathode active material, such as LiCoO₂, LiMnO₂, LiFeO₂, or Li(Ni_{0.6}Mn_{0.2}Co_{0.2})O₂.

The electrolyte may include a lithium salt and a non-aqueous organic solvent. In this case, the lithium salt and the non-aqueous organic solvent are not particularly limited, as long as the lithium salt and the non-aqueous organic solvent are commonly used of the lithium secondary battery electrolyte and an organic solvent.

The anode for the lithium secondary battery is not particularly limited, as long as the anode for the all solid state battery is commonly used. For example, the anode for the lithium secondary battery may include an anode active material such as a carbon-based active material or a silicon-based active material.

A case for the pouch-type secondary battery case may have excellent sealing intensity characteristics. Accordingly, the battery body part sealed by the pouch-type secondary battery case may not be exposed to the external environment.

### Method for preparing sealant film

Hereinafter, a method for preparing a sealant film according to the present disclosure will be described. The method for preparing the sealant film is not particularly limited to the method to be described below. The preparing method may be one of several methods for preparing the pouch film.

The present disclosure provides the method for preparing the sealant film, which includes adding a surface modifier in a content ranging from 1 wt% to 15 wt%, based on the total weight of a resin to perform matte-treatment with respect to the surface of the heat-seal layer, further adding the slip agent to the heat-seal layer, and stacking the metal adhesive layer, the core layer, and the heat-seal layer.

According to an embodiment of the present disclosure, the surface modifier may include at least one material selected from the group consisting of a polyolefin-based elastomer, polymethyl methacrylate, EPDM, silica, CaCO₃, BaSO₄, zeolite, and Talc. Specifically, to impart roughness to the surface of a sealant film, a surface modifier of an elastomer may be more appropriate, and may include a polyolefin-based elastomer resin. In this case, the surface of the heat-seal layer is imparted with surface roughness by the surface modifier, and the surface of the heat-seal layer, which is surface-modified or matte-treated by the surface modifier, may be referred to as a matte surface. The matte surface may prevent an additive, which includes the slip agent, from being exposed to the surface of the sealant film.

According to an embodiment of the present disclosure, the slip agent may have the content ranging from 0.01 wt% to 0.5 wt%. When an excessive amount of slip agent is added, although the formability may be improved, the seal strength may be reduced, thereby causing the failure of the winding state and the aging change, that is, the change in physical property over time. In addition, the degree to which an additive, such as a slip agent, migrates varies depending on conditions such as a temperature, pressure, and time, so the physical properties of the pouch may not be uniformly maintained. In addition, when the excessive amount of slip agent is migrated, the foreign matter issue may be caused in the process step, thereby degrading the reliability of the product. Meanwhile, when a smaller amount of additive, such as the slip agent, is added, the excellent seal strength may be exhibited or the excellent formability may be reduced.

Accordingly, according to the method for manufacturing the sealant film of the present disclosure, the excellent formability may be exhibited and the temporal change may be suppressed by performing matte-treatment of the surface of the heat-seal layer through the surface modifier and adjusting an amount of slip agent added in the range. Accordingly, deterioration in the performance of the pouch may be prevented in advance, reliability may be improved, and the defect rate may be reduced.

Hereinafter, examples of the present disclosure will be described in detail so that those skilled in the art to which the present disclosure pertains may readily reproduce the present disclosure. However, the present disclosure may be implemented in various forms, and is limited to embodiments described herein.

### Examples and Comparative Examples

A three-layer sealant film including a metal adhesive layer, a core layer, and a heat-seal layer was extruded using three-layer T-Die extrusion facilities. In this case, the heat-seal layer including casted PP (CPP) was formed by blending 90 wt% of CPP for a matrix resin and 10 wt% of polypropylene elastomer for a domain resin.

Thereafter, a laminate structure of PET 12 µm/Ny 15 µm /Al 40 µm / PP 80 µm was formed based on the prepared sealant film, and the PP layer and the Al (barrier) layer were bonded by an extrusion coating (EC) layer of a polypropylene-based resin through an extrusion lamination, thereby preparing a cell pouch-film laminate (Example 1) for a secondary battery.

The pouch-film laminate was formed in a manner the same as that of Example 1 except that the content and the average particle size of the polypropylene elastomer for the domain resin were adjusted as shown in Table 1, such that the matte-type of the surface of the heat-seal layer was changed, and following Table 1 shows the physical properties according to the Examples and the Comparative Examples.

**[Table 1]**

| Classification | | Example 1 | Example 2 | Comparative example 1 | Comparative example 2 |
|---|---|---|---|---|---|
| Type | | Semi-matt | Semi-matt | Flat | Matt |
| Average particle diameter of polypropylene elastomer | | 120 nm | 70 nm | 40 nm | 150 nm |
| Content of polypropylene elastomer | | 10% | 8% | <1% | 20% |
| Surface Roughness | Ra | 0.08 | 0.05 | 0.01 | 0.51 |
| | Rz | 0.42 | 0.30 | 0.12 | 3.00 |
| | Rt | 0.42 | 0.30 | 0.12 | 3.30 |
| | Rsm | 30 mic 5.8~75 | 15 mic 7.7~22 | 4 mic 2.2~6.9 | 30 mic 22~47 |
| Sled evaluation (contamination level) | | O.K | O.K | N.G | O.K |
| Frictional coefficient (static friction) | | 0.22 | 0.20 | 0.18 | 0.15 |
| Frictional coefficient (kinetic friction) | | 0.18 | 0.15 | 0.15 | 0.10 |
| Heat-seal strength (N/15 mm) | | 180 | 200 | 180 | 140 |
| PET adhesion (surface tension) | | 36 | 36 | 32 | 38 |
| Insulation resistance | | 60 | 60 | 40 | 10 |

### Experimental Example 1-Surface Roughness

The surface roughness of the heat-seal layer according to each of Examples and Comparative Examples was measured under the conditions of the resolution of 1024 x 1024, the laser intensity of 36.5, and the pitch of 0.24, through Laser illuminance meter. After measuring the roughness of five lines in the MD direction and five lines in the TD direction over the entire area, averages Ra, Rt, Rz, and Rsm were measured to calculate 10 average values.

### Experimental Example 2-Sled evaluation (contamination)

A black pouch (area of 10 cm × 10 cm) on a 200 g sled was attached to a sled surface using a friction tester (Labsink; FPT-F1), and placed to be in contact with the pouch-film laminate of each of the Examples and the Comparative Examples. In this case, the heat-seal surface (layer) was fixed to face up

The pouch-film laminate in a size of TD 120 mm × MD 250 mm was moved over a distance of 55 mm at a speed of 200 mm/min to wipe the heat-seal surface (layer). After the measurement, the slip agent was extracted from the surface of the black pouch, and then an amount of the slip agent was measured by gas chromatography (20 µg/cm³ or less: OK, 20 µg/cm³ or more: N.G.).

### Experimental Example 3- Frictional Coefficient

A frictional coefficient was measured using a friction tester (FPT-F1 by Labsink) in an upper MD direction and a lower MD direction of the pouch-film laminate according to each of the Examples and the Comparative Examples at a measurement speed of 200 mm/min. The measurement was performed under the conditions that the size of the upper pouch-film laminate was TD 65 mm × MD 120 mm, the size of the lower pouch-film laminate was TD 120 mm × MD 250 mm, and the total measurement distance was 55 mm (static 32 mm / kinetic 23 mm).

### Experimental Example 4 - Heat-seal strength

The sealant film prepared according to each of the Examples and the Comparative Examples was folded in half and compressed by adjusting pressure under a temperature of 180°C, such that a CPP residual ratio became 70%, thereby preparing a test sample. The prepared test samples were cut to a width of 15 mm, and an interface between CPP and CPP was separated at an angle of 180 degrees to measure the heat-seal strength between two layers. The heat-seal strength was measured using a heat-seal strength tester, AGS-1kNX model (UTM) manufactured by SHIMADZU (Japan).

### Experimental Example 5 - PET adhesion (Surface Tension)

The test sample according to each of the Examples and the Comparative Examples was placed on a flat surface under room-temperature conditions (25°C / RH 30-50%). Then, after drawing a line (200 to 250 mm) on an outer surface (PET surface) of the test sample using a dyne pen (Acrotest), wettability was evaluated after 10 seconds. When a liquid film was maintained, it was determined as OK. When the liquid film was shrunken, it was determined as 'N.G.', and a corresponding dyne value was recorded.

### Experimental Example 6 - Insulation Resistance

A pouch sample according to each of the Examples and the Comparative Examples was formed into a size of 30 mm × 40 mm × 5 mm, and a dummy cell was fabricated by performing side sealing and tab sealing for the pouch sample based on 2 mL of an electrolyte. Regarding the number of test samples, 10 dummy cells were manufactured per each sample. Then, the resistances were measured with respect to the dummy cells under a temperature condition of 60°C, when a voltage of 1 kV was applied after 24 hr was passed.

Referring to Table 1, Examples 1 and 2 satisfied the surface roughness values of the present disclosure. Accordingly, it may be confirmed that as the contact area between the PET and the PP was decreased to decrease the transfer amount of the slip agent from the PP layer to the PET layer, both contamination characteristics and insulation resistance characteristics exhibited excellent levels.

In contrast, Comparative Example 1 deviating from the range of the surface roughness value had a flat form. In this case, it may be confirmed that Comparative Example 1 exhibited lower contamination, lower PET adhesive strength and lower insulating resistance because the entire portion of the slip agent was transferred during the winding process

In addition, as in Comparative Example 2, when the Rt value is excessively large, a contact area is reduced, such that an amount of a slip agent transferred to the PET layer is reduced, which may be favorable in terms of contamination. However, as a content of an elastomer in the PP layer is increased, a swelling phenomenon occurs actively, such that the heat seal strength and the insulation resistance are decreased. In particular, an insulation resistance characteristic value may be significantly reduced, such that actual commercialization may be impossible.

### Acknowledgement

The present disclosure is a result performed to support a following project.
[Project ID Number] 1415185612
[Project Number] 20022450
[Ministry] Ministry of Trade, Industry and Energy
[Project Management Organization (Specialized Agency)] Korea Planning & Evaluation Institute of Industrial Technology (KEIT)
[Project Title] Materials and Components Technology Development (Flagship Company Program)
[Research Task Title] Development of a next-generation secondary battery pouch capable of achieving at least two fold higher seal strength (60°C)
[Contribution Ratio] 1/1
[Performing Organization] Youlchon Chemical Co., Ltd.
[Research Period] Jan. 1, 2023 - Dec. 31, 2023

## Claims

1. A sealant film comprising:
a matrix resin; and
a domain resin included in the matrix resin,
wherein the sealant film has a multi-layer structure including a metal adhesive layer, a core layer, and a heat-seal layer, and
wherein a surface of the heat-seal layer has a surface roughness with Ra of 0.03 to 0.1, Rz of 0.2 to 0.5, Rt of 0.2 to 0.5, and Rsm of 5.8 to 75.

2. The sealant film of claim 1, wherein the domain resin ranges 1 wt% to 15 wt%, based on a total weight of the resin composition.

3. The sealant film of claim 1, wherein the domain resin has an average particle diameter ranging from 50 nm to 140 nm.

4. The sealant film of claim 1, wherein the heat-seal layer has a surface-modified by the domain resin.

5. The sealant film of claim 1, wherein the matrix resin includes:
a polyolefin-based resin.

6. The sealant film of claim 1, wherein the domain resin includes:
at least one selected from the group consisting of a polyolefin-based elastomer, polymethyl methacrylate, EPDM, silica, CaCO₃, BaSO₄, zeolite, and Talc.

7. The sealant film of claim 1, wherein the surface of the heat-seal layer has a static frictional coefficient ranging from 0.2 to 0.23.

8. A pouch-film laminate comprising:
a sealant film according to claim 1;
an outer layer; and
a barrier layer interposed between the sealant film and the outer layer, and including aluminum.

9. The pouch-film laminate of claim 8, wherein the outer layer includes:
polyethylene terephthalate (PET).

10. A pouch-type secondary battery case comprising:
a pouch-film laminate according to claim 8.

11. A method for preparing a sealant film, the method comprising:
adding a surface modifier in a content ranging from 1 wt% to 15 wt%, based on a total weight of the resin composition to perform matte-treatment with respect to a surface of a heat-seal layer;
further adding a slip agent to the heat-seal layer; and
stacking a metal adhesive layer, a core layer, and the heat-seal layer.

12. The method of claim 11, wherein the surface modifier includes:
at least one material selected from the group consisting of a polyolefin-based elastomer, polymethyl methacrylate, EPDM, silica, CaCO₃, BaSO₄, zeolite, and Talc.

13. The method of claim 11, wherein the slip agent is added in a content ranging from 0.01 wt% to 0.5 wt%.
